# EUROPEAN PATENT APPLICATION

(11) **EP 1 081 695 A2**
(43) Date of publication of application: **07.03.2001**
(21) Application number: 00307329.3
(22) Date of filing: 25.08.2000
(51) Int. Cl.: G11B 17/028, G11B 17/04, B41J 2/01

(54) **Disk loading apparatus, disk mounting apparatus and method, and rotating printing apparatus**

(30) Priority: 27.08.1999 JP 24206799; 27.08.1999 JP 24206899
(71) Applicant: STAR MICRONICS CO., LTD., Shizuoka-shi, Shizuoka (JP)
(72) Inventor: Tsukuda, Yasunori, c/o Star Micronics Co., Ltd, Shizuoka-shi, Shizuoka (JP); Nagai, Kenichi, c/o Star Micronics Co., Ltd, Shizuoka-shi, Shizuoka (JP); Sawamoto, Norihiro, c/o Star Micronics Co., Ltd, Shizuoka-shi, Shizuoka (JP)
(74) Representative: Kinsler, Maureen Catherine

(57) **Abstract**

A disk loading apparatus comprises a tray (10) which reciprocates in a substantially horizontal direction under the condition that a disk (M) is mounted thereon, and stops at a disk accommodating position and a disk take-out position, and a rotating table (50) which is able to be positioned to upper and lower positions of a moving surface of the tray (10) under the condition that the tray (10) stops at the disk accommodating position.

## Description

The present invention relates to a disk loading apparatus and a disk mounting apparatus and method, for setting a disk-type medium such as a CD-R (compact disk-recordable) in a predetermined processing position. The invention also relates to a rotating printing apparatus for printing on a disk-type medium.

A CD-R is a non-erasable optical disk on which data can be recorded only one time, which is different from a read only-type CD and a CD-ROM (read only memory). Data recorded on the CD-R is reproducible by suitable reproducing apparatuses in exactly the same way as that of CDs and CD-ROMs. In many cases the CD-R is used for a small-scale publication of software of as large as 100 copies because of being inexpensive and easy to handle and its large recording capacity.

One side of CDs or CD-ROMs is used as a recording side for recording data which is to be read out, and the other side is generally used as a printing surface on which a title or the like is printed. Since CDs or CD-ROMs are generally published in the same design and in a large amount, they are printed by a large-sized printing apparatus, however, in the case of CD-Rs, which are published in a small amount or for personal use, a small-sized inexpensive printer is desired which can form or modify printing contents easily for each one or small units of copies.

Examples of such a printer are described in Japanese Unexamined Patent Publications JP-A 5-238005 (1993) and JP-A 6-31906 (1994). Those information recording apparatuses record information by a pick-up onto a recording surface of an optical disk, whose printing surface is subjected to ink jet-type printing. The printing of the optical disk is carried out by moving an ink jet nozzle in a radial direction of the optical disk, while the optical disk is rotating.

Since such an information recording apparatus employs an ink jet-type printing method, the information recording apparatus comprises an ink cartridge and a mechanism for leading ink to an ink jet head, and further comprises a pick-up for recording information, which makes the apparatus large-sized and complicated. Moreover, since the ink jet head and the pick-up are disposed in the same apparatus, ink sprayed from the ink jet head contaminates the pick-up and interferes with information recording. Furthermore, it takes much expense in time and effort to carry out maintenance operations such as exchanging an ink cartridge and cleaning a vicinity of the ink jet head.

In the case where an information recording apparatus as described above is attempted to be incorporated into an information processing unit such as a personal computer (PC), disk loading and unloading is difficult and large space is necessary for installing the apparatus itself.

### SUMMARY OF THE INVENTION

An object of the invention is to provide a disk loading apparatus capable of realizing easy handling of disks for users and being down-sized, and a disk mounting apparatus and method as well as a rotating printing apparatus using the same.

Various aspects of the present invention are defined in the independent claims. Some preferred features are defined in the dependent claims. More specifically, the invention provides a disk loading apparatus comprising:
a horizontally moving member which reciprocates in a substantially horizontal direction under condition that a disk is mounted thereon and stops at a disk accommodating position and a disk take-out position; and
a vertically moving member which is able to be positioned at lower and upper positions of the moving surface of the horizontally moving member under condition that the horizontally moving member stops at the disk accommodating position.

According to the invention, because the horizontally moving member reciprocates in the substantially horizontal direction under the condition that the disk is mounted thereon, a so-called front loading mechanism can be implemented in which a disk can be inserted and taken out from the front panel of a unit.

Disk transfer between the horizontally moving member and the vertically moving member is carried out by raising or lowering the vertically moving member under the condition that the horizontally moving member stops at the disk accommodating position. For example, in the case where the vertically moving member is provided with a disk rotating mechanism, by raising the disk rotating mechanism, the disk which has been transported by the horizontally moving member can be smoothly transferred to the disk rotating mechanism so as to be mounted thereon. On the contrary, when the rotating mechanism comes down under the condition that the disk is mounted thereon, the disk can be transferred to the horizontally moving member from the rotating mechanism.

In this way, the horizontal disk-transport and the disk loading to and disk unloading from the disk rotating mechanism can be implemented smoothly.

In the disk loading apparatus of the invention it is preferable that in the horizontally moving member is formed an opening through which the vertically moving member is able to pass and which has a minimum radius R2 smaller than a radius R1 of the disk.

According to the invention, by forming the opening in the horizontally moving member through which the vertically moving member is able to pass, interference between the vertically moving member and the horizontally moving member is prevented when the vertically moving member moves up and down. Therefore, in the case where the vertically moving member is displaced upwardly beyond the moving surface of the horizontally moving member, the disk which is mounted on the horizontally moving member can be smoothly transferred to the vertically moving member.

Further, since the minimum radius R2 of the opening is smaller than the radius R1 of the disk, support of the disk is ensured by the horizontally moving member.

Further, in the disk loading apparatus of the invention it is preferable that the horizontally moving member is provided with a disk supporting member having an opening a minimum radius R2 of which is changed over by changing the shape of the opening, between a smaller one than a radius R1 of the disk and a larger one than the radius R1.

According to the invention, in the case where with a change in the shape of the opening of the disk supporting member, the minimum radius R2 of the opening becomes smaller than the radius R1 of the disk, the disk is supported by the disk supporting member. In the case where the minimum radius R2 of the opening becomes larger than the radius R1 of the disk, the disk is transferred to the vertically moving member by its own weight. In this way the disk transfer between the disk supporting member and the vertically moving member can be carried out smoothly.

In addition, in the case where the disk rotating mechanism is provided in the vertically moving member, it is necessary that the rotating mechanism has a maximum radius R3 smaller than the minimum radius R2 of the opening in order for the rotating mechanism to pass through the moving plane of the horizontally moving member. Accordingly the maximum radius R3 of the rotating mechanism needs to be even smaller than the radius R1 of the disk, with the result that the disk loses the support of the rotating mechanism in the circumference area and there is a problem that the disk supporting force may become uneven in the radial direction of the disk. In particular, in the case where a radial line of the disk is printed with a contact-type printing head such as a thermal head, the contact with a circumferential portion of the disk becomes insufficient with the result that printing density is lowered.

Accordingly, by providing the disk supporting member having the opening whose shape is changed, in the horizontally moving member, the rotating mechanism is able to pass through the opening even when the maximum radius R3 of the rotating mechanism is nearly the same as the radius R1 of the disk, and the problem of the unevenness of the disk supporting force can be solved.

In the disk loading apparatus of the invention it is preferable that the disk loading apparatus comprises an interlocking mechanism for interlocking movements of the horizontally moving member and disk supporting member with each other.

According to the invention, since the shape of the opening of the disk supporting member can change in accordance with the movement of the horizontally moving member, the match between timing of the movement of the horizontally moving member to the disk accommodating position and timing of the disk transfer can be ensured.

The invention also provides a rotating printing apparatus comprising:
the disk loading apparatus as described above; and a printing head for printing on a disk surface,
wherein the disk is a heat sensitive printing medium having a heat sensitive color forming layer,
the printing head is a thermal head for heat sensitive printing in a main scanning direction along a radial direction of the disk; and
the vertically moving member has a rotating table for rotating the disk in a sub scanning direction.

According to the invention, the disk loading apparatus can smoothly carry out sequential operations of inserting a disk, mounting the disk on the rotating table, rotative printing on the disk and exhausting the disk, with the result that the labor of the user is greatly reduced. Additionally since the apparatus can be downsized as a whole, it can be easily incorporated into an information processing unit such as a personal computer (PC). In particular, the rotating printing apparatus can be built in a 5 inch bay of a PC or the like due to the front loading system of the disk in the same way as a CD-R drive or the like.

The invention also provides a disk mounting apparatus comprising:
a rotating table for rotatably supporting a disk; and
a disk holding member disposed so as to move independently of the rotating table in a direction of a rotating axis thereof, for holding a central portion of the disk.

According to the invention, when the disk holding member is raised, the disk can be held up under the condition of being separated from the rotating table. Accordingly certain space can be ensured between the disk and the rotating table, and the space is available to a disk transferring member such as a disk tray or other movable members, with the result that downsizing or making compact of the apparatus can be achieved.

Further, by providing the disk holding member with a centering mechanism which substantially fits a central hole of the disk, alignment of the center of the disk and the rotating axis of the rotating table can be ensured when the disk holding member is lowered.

In the disk mounting apparatus of the invention it is preferable that the disk mounting apparatus comprises a disk pressing member disposed to face the disk holding member, for catching the central portion of the disk together with the disk holding member.

According to the invention, the disk can be prevented from being displaced or dropped by catching the central portion of the disk by the disk holding member and the disk pressing member from both sides.

Further, the invention provides a method for mounting a disk comprising the steps of:
raising a disk holding member disposed so as to move independently of a rotating table in a direction of a rotating axis thereof, to hold a central portion of the disk;
moving the disk holding member or the rotating table relatively to each other in the direction of the rotating axis to mount the disk onto the rotating table.

According to the invention, when the disk holding member is raised, the disk can be held up under the condition of being separated from the rotating table. Accordingly certain space can be ensured between the disk and the rotating table, and the space is available to a disk transferring member such as a disk tray or other movable members, with the result that downsizing or making compact of the apparatus can be achieved.

Further, by providing the disk holding member with a centering mechanism which substantially fits the central hole of the disk, alignment of the center of the disk and the rotating axis of the rotating table can be ensured when the disk holding member is lowered.

In the method for mounting a disk of the invention it is preferable that the disk holding member catches the central portion of the disk, together with a disk pressing member disposed to face the disk holding member.

According to the invention, the disk can be prevented from being displaced or dropped by catching the central portion of the disk by the disk holding member and the disk pressing member from both sides.

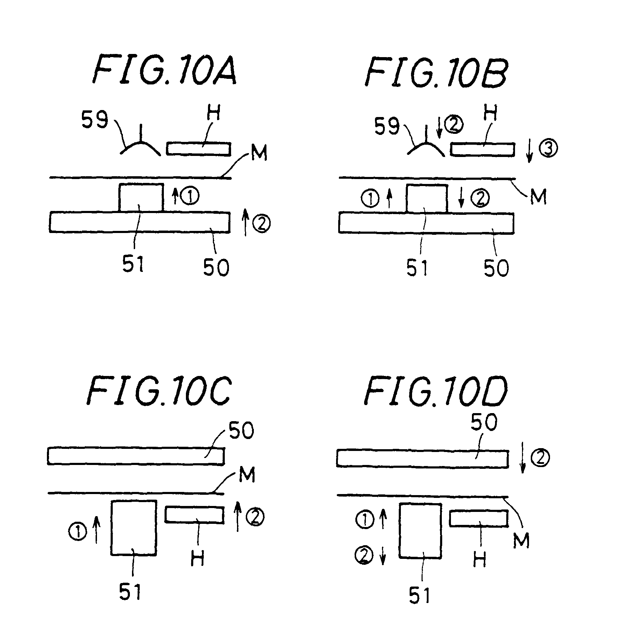

Applications of the invention are exemplified in the following. Figs. 10A to 10D are views illustrating a variety of configuration examples to which the invention is applicable. For the purpose of easy understanding a recording head H, a disk M, a rotating table 50, a center holder 51 and a disk presser 59 are shown as exemplary components.

Fig. 10A shows a configuration in which the rotating table 50 and the center holder 51 are disposed on the lower side of the disk M, and the recording head H and the disk presser 59 are disposed on the upper side of the disk M so that the rotating table 50 and the center holder 51 move up and down. In connection with the operational procedure, first the center holder 51 moves up to hold the central part of the disk M, which catches the disk M together with the disk presser 59 and, after that, the rotating table 50 moves up next to support the entire back surface of the disk M, which starts recording under the condition that the disk M is in contact with the recording head H. After completion of recording the operation converts to the reverse procedure, that is, first the rotating table 50 comes down and next the center holder 51 comes down.

Fig. 10B is a view showing an example of a configuration in which all parts excluding the rotating table 50 are movable. First the center holder 51 moves up to hold the central portion of the disk M, which is thereafter caught by the center holder 51 together with the disk presser 59 from both sides thereof, and after that, the center holder 51 and the disk presser 59 come down simultaneously to mount the disk M on the rotating table 50. Next, the recording head H comes down to contact the disk M and under such conditions the recording is started. When the recording is completed the operation converts to the reverse procedure, that is, first, the recording head H moves up, next, the center holder 51 and the disk presser 59 move up simultaneously and the center holder 51 comes down. The movement of the recording head H may be simultaneous to that of the disk presser 59.

Fig. 10C is a view showing a configuration in which the center holder 51 and the recording head H are placed on the lower side of the disk M and the rotating table 50 is placed on the upper side of the disk M so that the center holder 51 and the recording head H move up and down. In connection with the operational procedure, a first center holder 51 moves up to hold the central portion of the disk M and further moves up to press the disk M onto the rotating table 50 and, next, the recording head H moves up to contact the disk M and under such conditions the recording is started. When the recording is completed the operation is converted to the reverse order, that is, first the recording head H comes down and next the center holder 51 comes down.

Fig. 10D is a view showing an example of a configuration in which all parts excluding the recording head H are movable. The center holder 51 moves up to hold the central part of the disk M, and the rotating table 50 next comes down to contact the disk M. After that, the rotating table 50 and the center holder 51 come down simultaneously so as to contact the disk M with the recording head H, and under such condition the recording is started. When the recording is completed the operation is converted to the reverse procedure, that is, first the rotating table 50 and the center holder 51 move up, and next the center holder 51 comes down.

In this way, by providing the center holder 51 so as to move independently of the rotating table 50 in the direction of the rotating axis thereof, certain space can be ensured between the disk M and the rotating table 50, so that the space is available to the movable members such as the disk transferring member or the like.

The invention also provides a disk mounting apparatus comprising:
a horizontally moving member which reciprocates in a substantially horizontal direction under condition that a disk is mounted thereon and stops at a disk accommodating position and a disk take-out position;
a rotating table which is able to be positioned at lower and upper positions of a moving plane of the horizontally moving member under condition that the horizontally moving member stops at the disk accommodating position; and
a disk holding member, disposed so as to move independently of the rotating table in a direction of a rotating axis thereof, for holding a central portion of the disk.

According to the invention, because the horizontally moving member reciprocates in the substantially horizontal direction under the condition that a disk is mounted thereon, the so-called front loading mechanism can be implemented in which a disk can be inserted and taken out from the front panel of a unit.

Further, by raising and lowering the rotating table under the condition that the horizontally moving member stops at the disk accommodating position, disk transfer between the horizontally moving member and the rotating table becomes possible.

When the disk holding member is raised, certain space can be ensured between the disk and the rotating table because the disk can be supported under the condition of being separated from the rotating table. Accordingly, the horizontally moving member such as a disk tray can pass through this space to make the disk transferring operation easier, and downsizing and making compact of the apparatus can be achieved.

Further the invention provides a method for mounting a disk comprising the steps of:
stopping a horizontally moving member at a disk accommodating position under condition that the disk is mounted thereon;
raising a disk holding member which is disposed so as to move independently of a rotating table in a direction of a rotating axis thereof, under condition that the horizontally moving member stops at a disk accommodating position, to hold a central part of the disk; and
raising the rotating table so as to transfer the disk onto the rotating table.

According to the invention, because the horizontally moving member reciprocates in the substantially horizontal direction under the condition that the disk is mounted thereon, the so-called front loading mechanism can be implemented where a disk can be inserted and taken out from the front panel of the unit.

By raising or lowering the rotating table under the condition that the horizontally moving member stops at the disk accommodating position, the disk can be transferred between the horizontally moving member and the rotating table becomes possible.

When the disk holding member is raised, certain space can be ensured between the disk and the rotating table because the disk can be held up under the condition of being separated from the rotating table. Accordingly, the horizontally moving member such as a disk tray can pass through this space to make the disk transferring operation easier, and downsizing and making compact of the apparatus can be achieved.

Further, the invention provides a method for mounting a disk comprising the steps of:
lowering a rotating table under condition that a disk is mounted thereon and transferring the disk to a disk holding member displaced so as to move independently of a rotating table in a direction of a rotating axis thereof, to hold a central portion of the disk;
lowering the disk holding member so as to transfer the disk to a horizontally moving member; and
stopping the horizontally moving member at a disk take-out position under condition that the disk is mounted thereon.

According to the invention, when the disk holding member is raised, since the disk can be held up under the condition of being separated from the rotating table, certain space can be ensured between the disk and the rotating table. Accordingly, the horizontally moving member such as a tray can pass through this space to make the disk transferring operation easier and downsizing and making compact of the apparatus can be achieved.

Further, since the horizontally moving member reciprocates in the substantially horizontal direction under the condition that a disk is mounted thereon, the so-called front loading mechanism can be implemented where a disk can be inserted and taken out from the front panel of the unit.

Further the present invention provides a rotating printing apparatus comprising:
the disk mounting apparatus as described above; and a printing head for printing on a surface of a disk,
wherein the disk is a heat sensitive printing medium having a heat sensitive color forming layer,
the printing head is a thermal head for heat sensitive printing in a main scanning direction along a radial direction of the disk, and
the rotating table rotates the disk in a sub scanning direction.

According to the invention, with the disk loading apparatus can smoothly carry out sequential operations of inserting a disk, mounting the disk on the rotating table, rotative printing on the disk and exhausting the disk, with the result that the labor of the user is greatly reduced.
Additionally since the apparatus can be downsized as a whole, it can be easily incorporated into an information processing unit such as a personal computer. In particular, the rotating printing apparatus can be built in a 5 inch bay of a PC or the like using the front loading system of disks in the same way as a CD-R drive or the like.

Other and further objects, features, and advantages of the invention will be more explicit from the following detailed description taken with reference to the drawings wherein:
Figs. 1A and 1B are perspective views showing an apparatus in which the invention is embodied;
Fig. 2 is an exploded perspective view showing the internal configuration of another apparatus in which the invention is embodied;
Fig. 3 is a plan view showing a tray 10 in a state immediately before being accommodated;
Figs. 4A and 4B are side and plan views showing the tray 10 in an accommodated state;
Fig. 5 is a partial expanded view of a front right side corner portion of the tray 10 as shown in Fig. 3;
Fig. 6 is an exploded perspective view showing a center holder 51 in a lowered state;
Fig. 7 is an exploded perspective view showing the center holder 51 in a raised state;
Fig. 8 is an exploded perspective view showing a rotating table 50 in a raised state;
Fig. 9 is a flow chart showing loading and unloading operations of a disk M; and
Figs. 10A to 10D are views illustrating a variety of configuration examples.

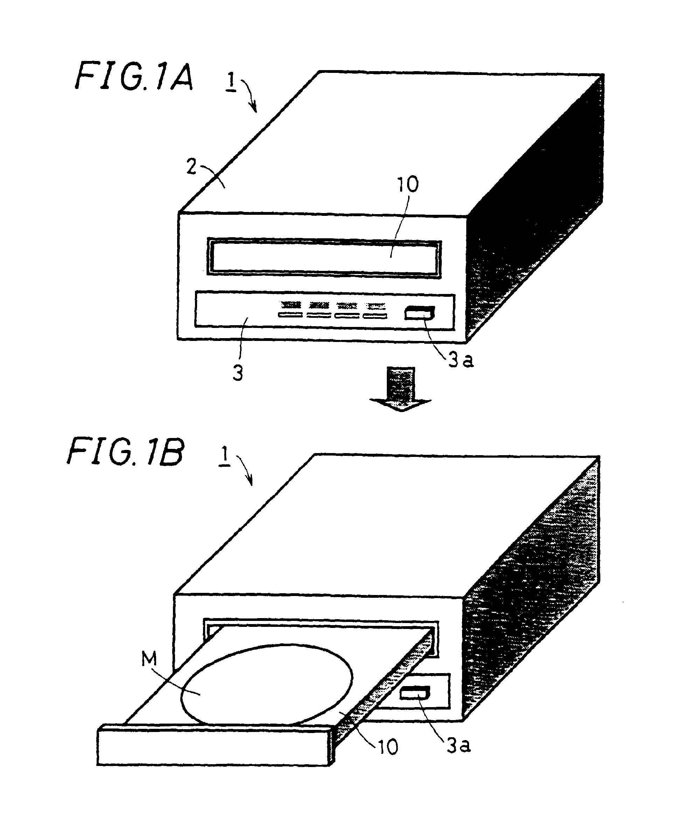

Figs. 1A and 1B show a rotating printing apparatus 1 comprising a housing 2 which covers a body of the apparatus, an operational panel 3 provided in the front side thereof, a tray 10 which reciprocates from the front in the horizontal direction.

The dimension of the housing 2 is standardized in the same way as other pieces of peripheral equipment and is designed so as to be able to be built into a 5 inch bay or the like of personal computers (PCs). The apparatus may be constructed as a piece of exterior attachment-type peripheral equipment of PCs.

On the operational panel 3 are provided operational switches and display lamps such as a tray button 3a for manually instructing opening and closing of the tray 10. The opening and closing operations of the tray 10 can be carried out not only by the tray button 3a but also by a command from a host apparatus. As shown in Fig. 1B, the tray 10 protrudes out of the front of the apparatus and stops at a position where a disk M is set or taken out, or, as shown in Fig. 1A, the tray is moved backwardly so as to be accommodated within the housing 2.

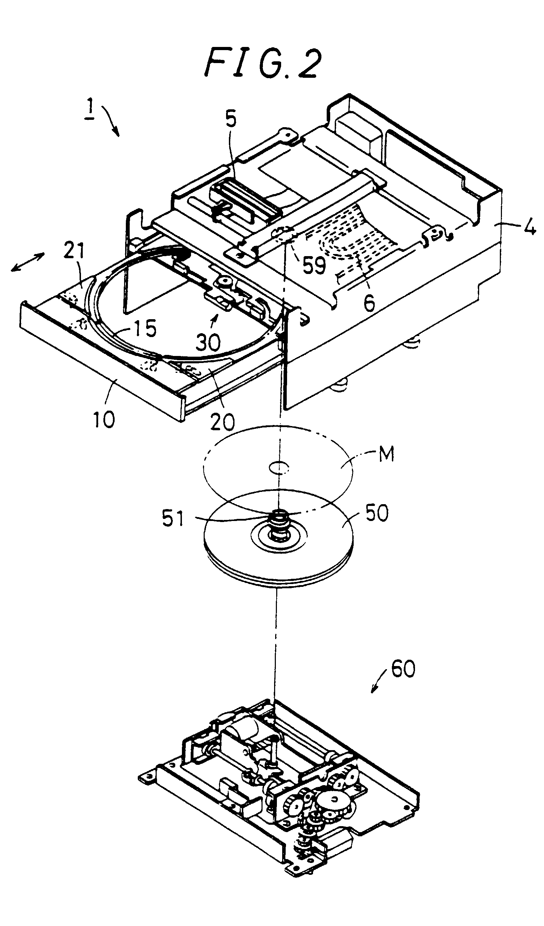

Fig. 2 is an exploded perspective view showing the internal configuration of a rotating printing apparatus 1. This comprises a rotating table 50 on which the disk M is mounted, a recording unit 4 for printing on a label of the disk M, a driving unit 60 for driving the rotating table 50, the tray 10 and the like.

It is possible for the recording unit 4 to adopt a variety of printing systems, and herein full color printing according to a heat sensitive recording system is described as an example. The heat sensitive recording system is called a TA (thermo-auto chrome) system, which forms the same configuration on a label surface of the disk M as that of multi-color heat sensitive recording sheets as described in Japanese Unexamined Patent Publications JP-A 3-43293 (1991) and JP-A 5-69566 (1993).

A multi-color heat sensitive recording sheet has heat sensitive color forming layers which are a yellow color forming layer, a magenta color forming layer and a cyan color forming layer, which selectively form a color when a predetermined heat energy is applied and selectively stop forming a color when a predetermined fixative light is irradiated.

The yellow color forming layer includes a yellow pigment material and a coupler which are encapsulated in micro-capsules. When a heat energy of 20 mJ/mm² or more is applied to the yellow color forming layer, the capsules are broken and a color formation of the yellow color forming layer starts, and when ultraviolet light of a wavelength of 420 nm is irradiated, the yellow pigment material unreacted is decomposed and the color formation stops.

The magenta color forming layer includes a magenta pigment material and a coupler which are encapsulated in micro-capsules. When a heat energy of 40 mJ/mm² or more is applied to the magenta color forming layer, the capsules are broken and a color formation of the magenta color forming layer starts, and when ultraviolet light of a wavelength of 365 nm is irradiated, the magenta pigment material unreacted is decomposed and the color formation stops.

The cyan color forming layer includes a cyan dye encapsulated in micro-capsules. When a heat energy of 80 mJ/mm² or more is applied to the cyan color forming layer, the capsules are broken and a color formation of the cyan color forming layer starts. As for the cyan color forming layer, the level of heat energy which causes the start of the color formation is high, and therefore, the color formation will not proceed under normal handling. Accordingly the fixing by ultraviolet light irradiation is not carried out.

In this way by carrying out yellow printing, magenta printing and cyan printing in sequence, full color printing can be implemented.

In order to adapt to this recording system, the recording unit 4 comprises a line-type thermal head 5 arranged along the radial direction of the disk M and a fixative lamp 6 of a curved shape for fixing color forming layers of the disk M. A rotating coordinate-type raster image is formed on a label surface of a disk M which is rotating on the rotating table 50 by carrying out heat sensitive recording on the disk M, with the thermal head 5, which raster image is composed of main scanning lines along the radial direction of the disk M and sub scanning lines along the circumferential direction of the disk M.

On a surface reverse to the label surface of the disk M is formed an information recording layer which is available for optical recording or opto-magnetic recording, which can be used as, for example, a CD, a CD-ROM, a CD-R, a CD-RW, a DVD-ROM, a DVD-RAM, a DVD-R and a DVD-RW.

The recording unit 4 is provided with a tray 10 for carrying out loading or unloading of the disk M which reciprocates in the substantially horizontal direction and which stops at a disk accommodating position and a disk take-out position, as shown in Figs. 1A and 1B.

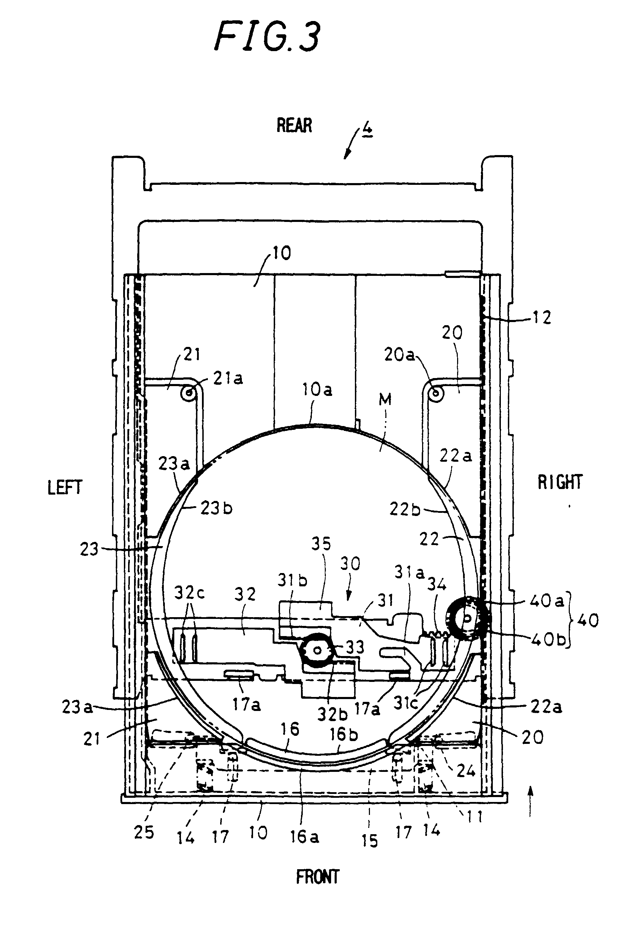

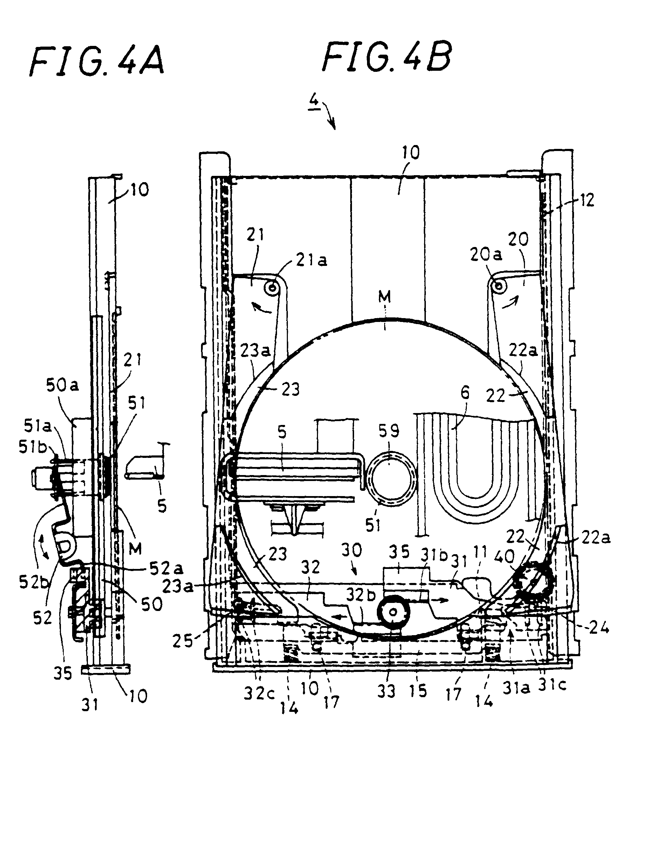

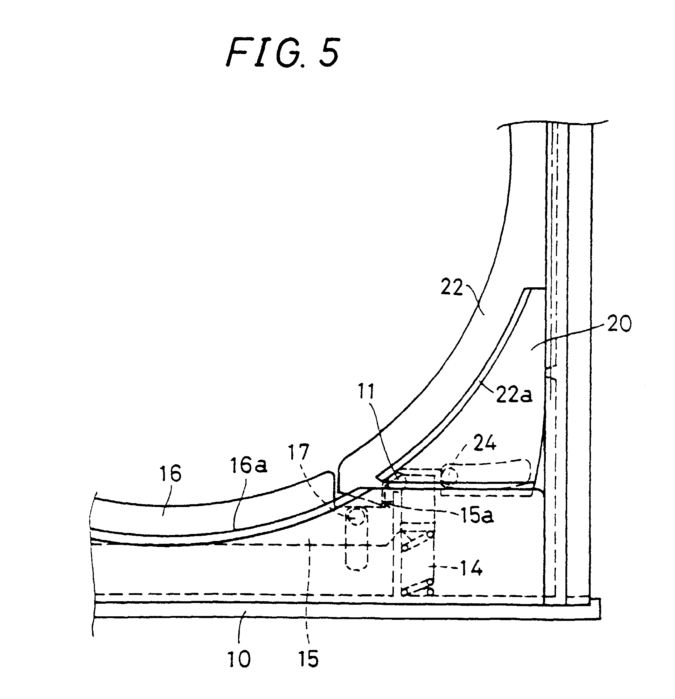

Figs. 3, 4A and 4B are views for explaining the configuration and movement of the tray 10, Fig. 3 is a plan view showing the tray 10 which is in a state immediately before being accommodated, and Figs. 4A and 4B are side and plan views of the tray 10, respectively, which is in an accommodated state. Fig. 5 is an enlarged view of a part of the front right side corner of the tray 10 shown in Fig. 3. The tray 10 is formed as a rectangular frame having a circular opening 10a through which the disk M is able to pass vertically. Both sides of the tray 10 are guided along linear guides (not shown) of the recording unit 4 so as to allow the horizontal movement of the tray 10. On the right side of the tray 10 is formed a rack 12 facing inward and the tray 10 moves back and forth responsive to the forward and backward rotations of a drive gear 40 under the condition that the rack 12 is engaged with an outer pinion 40a of the drive gear 40.

A pair of right and left disk supports 20 and 21 are attached onto the upper surface of the tray 10 by back pins 20a and 21a so as to be angularly displaceable in the horizontal plane. The disk supports 20 and 21 are arranged so as to sandwich the circular opening 10a of the tray 10 therebetween from the right and the left. On the disk supports 20 and 21 are formed steps 22a and 23a having a curved shape so as to fit the shape of the circular opening 10a and plane parts 22 and 23 for supporting the outer periphery of the disk M are formed inwardly from the steps 22a and 23a. Further inwardly are formed edge surfaces 22b and 23b having a curved shape.

The steps 22a and 23a are provided in order to facilitate centering of the disk M in setting it on the tray 10 under the condition that the disk supports 20 and 21 are closed, as shown in Fig. 3, which steps 22a and 23a are formed to have a slightly larger radius than that of the outer periphery of the set disk M. The edge surfaces 22b and 23b are provided in order to ensure an opening area through which the disk M can pass under the condition that the disk supports 20 and 21 are open right and left, as shown in Figs. 4A and 4B, which edge surfaces are formed to have a slightly larger radius than that of the outer periphery of the disk M. Accordingly, the plane parts 22 and 23 which are elongated, curved and located between the step 22a and the edge surface 22b and between the step 23a and the edge surface 23b, respectively, form areas which can support the disk M.

In addition, a third disk support 15 is attached to the front of the tray 10 so as to be displaced back and forth in the horizontal plane, which disk support 15 is disposed on the front side of the circular opening 10a of the tray 10 and provided with a step 16a of a curved shape which is formed so as to fit the shape of the circular opening 10a the same as the right and left disk supports 20 and 21, and a plane part 16 formed for supporting the outer periphery of the disk M is formed inwardly from the steps 16a. Further inwardly is formed an edge surface 16b having a curved shape.

The same as the steps 22a and 23a, the step 16a is also provided in order to facilitate positioning of the disk M on the tray 10, which step 16a is formed to have a slightly larger radius than that of the outer periphery of the disk M in a state as shown in Figs. 4A and 4B. The same as the edge surfaces 22b and 23b, the edge surface 16b is provided in order to ensure an opening area through which the disk M can pass, which edge surface 16b is formed to have a slightly larger radius than that of the outer periphery of the disk M in a state as shown in Figs.4A and 4B. The plane part 16 supports the disk M together with the plane parts 22 and 23.

An engaging pin 11, integrally formed on the back side of the front of the tray 10, projects downwardly, and a pair of right and left contact pins 17, integrally formed on the back side of the disk support 15, project downwardly. On the back side of the front of the disk supports 20 and 21 are also formed engaging pins 24 and 25, respectively, which project downwardly.

The disk support 15 is urged to the inside of the circular opening 10a by coil springs 14 on both sides in a state as shown in Fig. 3. As shown in Fig. 5, lock mechanisms 15a are provided on the right and left sides, which engage with the disk support 15 in order to prevent the disk supports 20 and 21 from opening outwardly when the disk support 15 is projecting into the circular opening 10a. When the disk support 15 is retracted from the circular opening 10a, the lock mechanisms 15a are released.

A slide mechanism 30 interlocked with the movement of the tray 10 is provided in the front of the recording unit 4, which slide mechanism 30 comprises a pair of right and left slide members 31 and 32 which are displaceable in the lateral direction of the recording unit, and gear 33 for interlocking the movement of the slide members 31 and 32 with each other. Racks 31b and 32b engaging with the gear 33 are formed on the slide members 31 and 32 and, for example, when the slide member 31 displaces to the right direction, the slide member 32 displaces to the left direction through the gear 33 so that the slide members are interlocked with each other so as to be movable in mutually opposite directions.

A cam groove 31a having a front lead-in part corresponding to the position where the engaging pin 11 of the tray 10 is inserted is formed on the right side slide member 31, in which cam groove 31a are formed an inclining groove which inclines at about 45 degrees in the longitudinal direction of slide member 31 and an escape groove, which is continuous with the inclining groove and parallel to the longitudinal direction.

A rack 34 facing backward is formed on the edge part of the slide member 31 and when the rack 34 is engaged with the inner pinion 40b in the drive gear 40, the slide member 31 moves in the right or left direction according to the forward or reverse rotation of the drive gear 40.

Engaging parts 31c and 32c projecting upward are integrally formed on the right and left parts of the slide members 31 and 32, respectively, so as to correspond to the positions where the engaging pins 24 and 25 of the disk supports 20 and 21 are inserted. The engaging parts 31c and 32c are formed of a pair of parallel plates perpendicular to the longitudinal direction of the slide members 31 and 32.

Next, the movements of the tray 10 and slide member 31 are described. As shown in Fig. 1B, when, after the disk M is mounted on the tray 10 in state where the tray 10 stops at the disk take-out position, a load command is issued by the tray button 3a or the like, a motor for driving the drive gear 40 is activated to move the tray 10 in the accommodated direction.

At this time, as shown in Fig. 3, the disk M is supported by the plane parts 22 and 23 since the minimum radius R2 of the opening area formed by the edge surfaces 16b, 22b and 23b of the disk supports 15, 20 and 21 is smaller than the radius R1 of the disk M.

Immediately before the tray 10 is accommodated, the engaging pin 11 of the tray 10 is inserted into the cam groove 31a of the slide member 31 and the engaging pins 24 and 25 of the disk supports 20 and 21 are also inserted into the engaging parts 31c and 32c of the slide member 31. When the engaging pin 11 contacts the inclining groove of the cam groove 31a, the right side slide member 31 displaces to the right direction and the left slide member 32 is, also, displaced to the left direction via the gear 33. At that time the contact pin 17 of the disk support 15 contacts stoppers 17a fixed to the recording unit 4 and the disk support 15 is displaced to the front.

When the slide member 31 moves to the extent that the engaging pin 11 reaches the escape groove of the cam groove 31a, the rack 34 of the slide member 31 starts engaging with the inner pinion 40b of the drive gear 40. At that time the engagement of the rack 12 of the tray 10 with the outer pinion 40a of the drive gear 40 is released and the tray 10 stops at the disk accommodating position as shown in Fig. 1A.

Thereafter, the slide member 31 and 32 are driven by the drive gear 40, and as shown in Fig. 4B, when the engaging parts 31c and 32c push out the engaging pins 24 and 25 to the outside, the disk supports 20 and 21 are also angularly displaced to the outside. When a micro-switch (not shown) detects the maximum displacement of the slide members 31 and 32, the motor for driving the drive gear 40 is halted.

Since under this condition the minimum radius R2 of the opening area formed by the edge surfaces 16b, 22b and 23b of the disk supports 15, 20 and 21 is larger than the radius R1 of the disk M, the disk M is able to pass through vertically. At this time the disk M is held up by the center holder 51 as described in the following.

Next, when an unload command is issued by the tray button 3a or the like, the drive motor of the drive gear 40 is rotated in reverse so that the slide members 31 and 32 are displaced inwardly. At this time the engaging parts 31c and 32c draw the engaging pins 24 and 25 toward the inside, the disk supports 20 and 21 are angularly displaced inwardly so as to be restored to the original positions and the inclining groove of the cam groove 31a and the engaging pin 11 contact each other to push out the tray 10 to the front. At this time the disk support 15 which has been pushed toward the inside by the stopper 17a is also restored to the original position.

When the slide members 31 and 32 are restored to the inside, the engagement between the rack 34 and the inner pinion 40b is released, and the engagement between the rack 12 of the tray 10 and the outer pinion 40a is started. After that, the tray 10 is driven toward the front by the drive gear 40 so as to return to the state as shown in Fig. 3. When a micro-switch (not shown) detects the maximum displacement of the tray 10, the drive motor of the drive gear 40 is halted so that the tray 10 stops at the disk take-out position as shown in Fig. 1B.

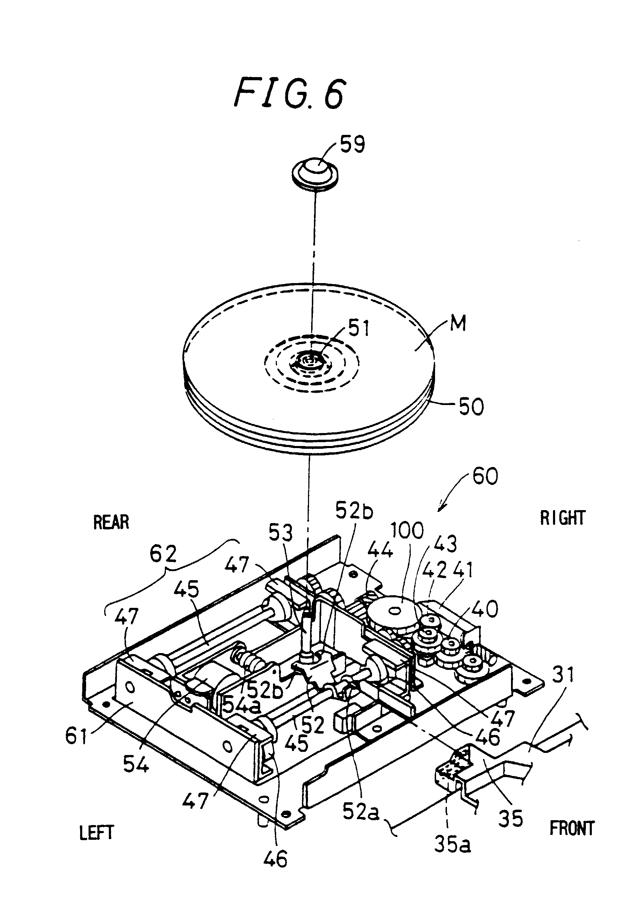

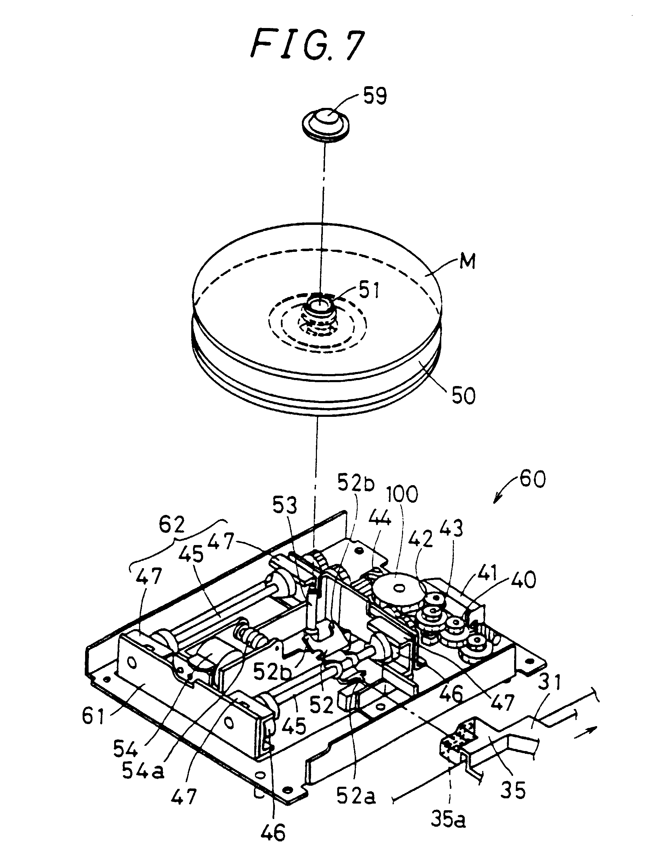

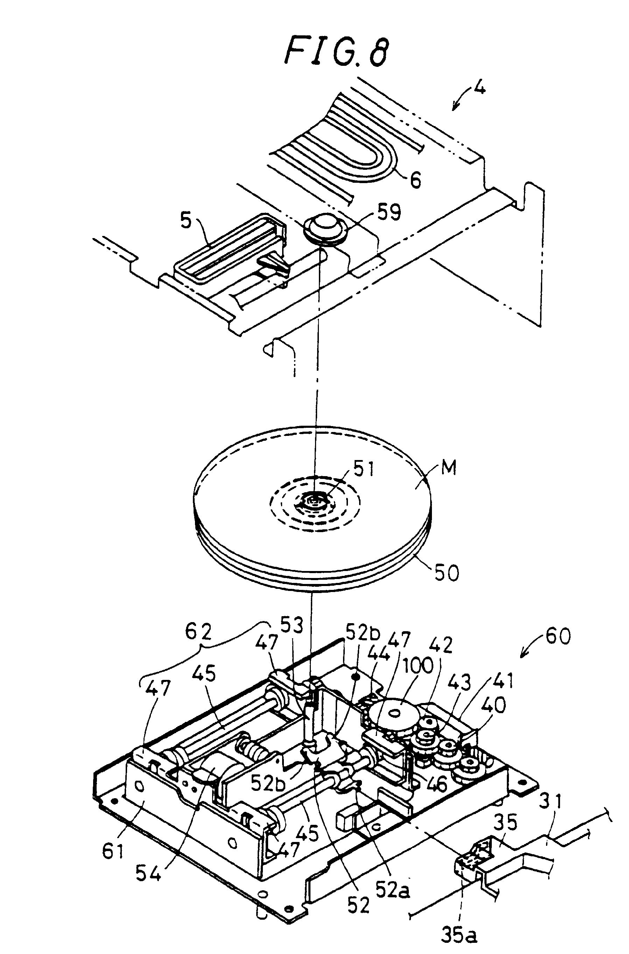

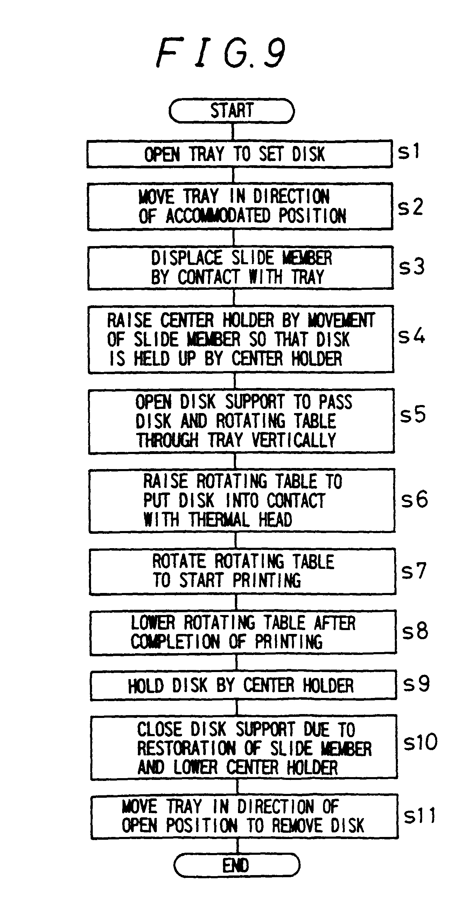

Figs. 6 to 8 are exploded perspective views showing the configuration and movement of the center holder 51 and rotating table 50. Fig. 6 is a view showing a state where the center holder 51 is lowered, Fig. 7 is a view showing a state where the center holder 51 is raised and Fig. 8 is a view showing a state where the rotating table 50 is raised.

The drive unit 60 comprises a recording-purpose motor 54 for rotary-driving the rotating table 50 and a motor 41 for driving the mechanisms of the tray 10, slide members 31 and 32 and the like, and the motor 54 is constructed with a pulse motor or the like for gaining high torque at low speed and the motor 41 is constructed with a DC motor or the like.

The rotating table 50 is mounted to a spindle axis 53 of a raising and lowering unit 62 so as to be nearly coaxial with the circular opening 10a under the condition that the tray 10 stops at the disk accommodating position. A drive gear 50a (shown in Fig. 4A) is attached onto the back side of the rotating table 50 so as to engage with the worm gear 54a driven by the motor 54.

The raising and lowering unit 62 is constructed so as to be able to slide in the vertical direction to an inner frame 61 of the drive unit 60. The inner frame 61 horizontally supports a pair of drive axes 45 separated by a predetermined distance, with the spindle axis 53 in between, and cams 46 are attached to both ends of each axis 45. In the upper corners of the raising and lowering unit 62, bent parts 47 for contacting four cams 46 are formed.

The raising and lowering unit 62 is urged downwardly by the coil springs (not shown) attached to the inner frame 61 and when the drive axis 45 is rotated forwardly, the cams 46 push up the bent parts 47 so that the raising and lowering unit 62 is raised and, on the other hand, when the drive axis 45 is rotated backwardly, the raising and lowering unit 62 is lowered. The rotating table 50 is thus lowered and raised.

The output axis of the motor 41 is linked to the drive gear 40 which drives the tray 10 and the slide members 31 and 32 via a series of reduction gears and is further linked to the two drive axes 45 via a series of gears such as a planet gear 42, a sun gear 43, a screw gear 44 and the like. The planet gear 42 is angularly displaced about the sun gear 43 and forms a clutch mechanism through the engagement and disengagement with a gear 100 at the rear.

The drive axis 45 on the front side is co-used as a support axis of a lever member 52, which is supported so as to be angularly displaced about the drive axis 45. At the front end of the lever member 52 is formed a protrusion 52a and at the rear end thereof is formed a U-shaped engaging piece 52b.

At the rear side of the slide member 31 is formed a thick engaging part 35, which is provided with a step groove 35a which engages with the protrusion 52a. The step groove 35a has two lateral grooves of different heights and an inclined groove which connects them and the height of the protrusion 52a changes responsive to the horizontal movement of the slide member 31 so that the engaging piece 52b at the rear displaces up and down.

In the center of the rotating table 50, the center holder 51 for fitting the inner hole of the disk M to center the disk M is disposed so as to be raised and lowered independently of the rotating table 50 in the direction of the rotating axis of the rotating table. As shown in Fig. 4A, the center holder 51 has four legs 51a so as to surround an axis bearing part of the rotating table 50 and the lower edge of each leg 51a is linked to each other with a ring member 51b. The center holder 51 is urged upwardly by a coil spring (not shown) mounted coaxially thereto, and since the engaging piece 52b of the lever member 52 is engaged with the ring member 51b, it becomes possible for the center holder 51 to be displaced vertically responsive to the vertical displacement of the engaging piece 52b.

Above the center holder 51 is coaxially disposed a cap-shaped disk presser 59 so as to confront the center holder 51, which is, as shown in Fig. 2, elastically supported onto the back side of the ceiling plate of the recording unit 4 by a coil spring or the like.

When the center holder 51 is raised, the disk M is caught in between by the center holder 51 and the disk presser 59 from both side of the disk, and accordingly the disk M is ensured from being positionally displaced or dropping.

Fig. 9 is a flow chart showing loading and unloading operations of the disk M. First at step s1, as shown in Fig. 1B, in an opened state where the tray 10 is drawn out to the front, the disk supports 15, 20 and 21 are all returned to the inside of the circular opening 10a, and accordingly the disk M can be mounted on the tray 10. At this time the slide members 31 and 32 are located inside, and, as shown in Fig. 6, the center holder 51 and the rotating table 50 are in the lowered position to be retracted from the movement of the tray 10.

Next, at step 2, when a load command is issued by the tray button 3a or the like, the motor 41 rotates so that the tray 10 with the disk M mounted, moves in the direction of the accommodated position. At this time the planet gear 42 is away from the sun gear 43 so as to be in the clutch-off state.

Next, at step s3, immediately before the tray 10 is accommodated, the engaging pin 11 of the tray 10 contacts the cam groove 31a of the slide member 31 so that the slide members 31 and 32 are displaced to the outside. At this time, the contact pin 17 of the disk support 15 also contacts the stopper 17a.

Next, at step s4, when the engaging part 35 of the slide member 31 is displaced to the outside, as shown in Fig. 7, the protrusion 52a of the lever member 52 is pressed downwardly and the engaging piece 52b is displaced upwardly and, therefore, the center holder 51 is raised and the disk M is transferred from the disk supports 15, 20 and 21 to the center holder 51 to be supported thereon. In addition, as shown in Fig. 4B, the outward displacement of the slide members 31 and 32 allows the disk supports 20 and 21 to open to the right and to the left and the contact pin 17 is pressed to open the disk support 15 as well.

Next, at step s5, since when the disk supports 15, 20 and 21 are in an opened state, the minimum radius R2 of the opening area is larger than the radius R1 of the disk M, it becomes possible for the disk M and the rotating table 50 having a radius almost equal to that of the disk M, to pass through the tray 10 vertically. Then the system is put into a stand-by state, where printing data or the like from the PC is waited for. At this time the planet gear 42 is engaged with the sun gear 43 to be in the clutch-on state.

In this way, since in the stand-by state where the center holder 51 is raised, certain space can be ensured between the disk M and the rotating table 50, the space where the disk supports 15, 20 and 21 or the like can move is ensured.

Next, at step s6, when a printing start command is issued from the PC in the stand-by state, the motor 41 rotates to drive each drive axis 45 via the planet gear 42, the gear 100, the screw gear 44 and the like. Then the unit 62 is raised and the rotating table 50 stops also at a raised position, that is, as shown in Fig. 8, a vicinity of the inner hole of the disk M is put into a state of being caught by the center holder 51 and disk presser 59 from both sides thereof so that the entire label surface of the disk M is supported by the rotating table 50. At this time the thermal head 5 also contacts the label surface of the disk M.

Next, at step s7, the motor 54 rotates to start the rotation for the sub scanning by the rotating table 50 and the main scanning recording is carried out by the thermal head 5 based on the printing data from the PC so as to finally form a rotation coordinate-type raster image by heat sensitive printing on the label surface of the disk M.

Next, at step s8, when a printing completion command is issued from the PC, the motor 41 rotates in reverse so that the raising and lowering unit 62 is lowered and the rotating table 50 stops also at the lowered position. At that time, the planet gear 42 is away from the gear 100 so as to be in the clutch-off state.

Due to the operation of step s8, as shown in Fig. 7, the disk M is transferred to the center holder 51 from the rotating table 50 so as to be supported by the center holder 51 (step s9), and the system is in the stand-by state again.

Next, at step s10, when an unload command is issued by the PC or the tray button 3a or the like in the stand-by state, the motor 41 rotates in reverse to displace the slide member 31 inwardly. The inward displacement of the slide members 31 and 32 allow the disk supports 20 and 21 to close inwardly. Then, as shown in Fig. 6, the inward displacement of the engaging part 35 pushes up the protrusion 52a of the lever member 52 upwardly and the engaging piece 52b is displaced downwardly, so that the center holder 51 is lowered and the disk M is transferred to the disk supports 20 and 21 from the center holder 51. The center holder 51 and the rotating table 50 are downwardly retracted.

Next, at step sll, when the tray 10 is pushed out by the cam groove 31a of the slide member 31, the drive gear 40 engages with the rack 12 to move the tray 10 to the front and the disk support 15 returns to the inside to give auxiliary support to the disk M. The tray 10 further moves and stops, as shown in Fig. 1B, at the disk take-out position.

In this way, by providing a opening radius changing mechanism including the disk supports 15, 20 and 21, it becomes possible for the rotating table 50 which has a radius almost equal to the radius R1 of the disk M, to pass through the circular opening 10a of the tray 10. As a result, the contact pressure distribution of the thermal head 5 can be made uniform in the radial direction and, therefore, high quality image printing with little density fluctuation can be implemented across the whole range of the disk M.

Additionally, by interlocking the movement of the tray 10, the movement of the disk supports 15, 20 and 21 as well as the movement of the center holder 51 with each other, transfer control of the disk M can be ensured.

The radius of the rotating table 50 or the length of the thermal head 5 can be properly selected in accordance with the printing area of the disk M. For example, in the case where the printing area is smaller than the radius R1 of the disk M, the circular opening 10a of the tray 10 can become accordingly smaller, therefore, the passing through of the rotating table 50 and the support of the disk M by the tray can both be achieved without providing the opening radius changing mechanism as described above.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and the range of equivalency of the claims are therefore intended to be embraced therein.

## Claims

1. A disk loading apparatus comprising:
a horizontally movable member (10) for mounting a disk (M) thereon, the horizontally movable member being movable between a disk take-out position and a disk accommodating position; and
a vertically movable member (50) that is movable between lower and upper positions relative to the horizontally movable member (10) when the horizontally movable member (10) is at the disk accommodating position.

2. A disk loading apparatus as claimed in claim 1, wherein an opening is formed in the horizontally movable member, through which the vertically movable member (50) is able to pass, the opening having a minimum radius R2 smaller than a radius R1 of the disk (M).

3. A disk loading apparatus as claimed in claim 1, wherein the horizontally movable member (10) has variable means for defining an opening wherein the variable means for defining an opening are operable to vary a size or shape of the opening between a first size or shape in which the disk is supported on the horizontally movable member and a second size or shape that allows the disk to pass the opening.

4. A disk loading apparatus as claimed in claim 3, wherein the means for defining the variable size opening are operable to define an opening having a minimum radius that is smaller than the disk and a radius that is larger than the disk.

5. A disk loading apparatus as claimed in claim 4, comprising an interlocking mechanism (31, 32, 33) for interlocking movements of the horizontally moving member (10) and the means for defining the opening with each other.

6. A rotating printing apparatus (1) comprising the disk loading apparatus as claimed in any one of claims 1 to 5 and a printing head for printing on a disk surface, wherein the vertically movable member (50) has a rotating table (50) for rotating the disk (M) relative to the printing head.

7. A rotating printing apparatus as claimed in claim 6, wherein the disk (M) is a heat sensitive printing medium having a heat sensitive color forming layer, the printing head is a thermal head (5) for heat sensitive printing in a main scanning direction along a radial direction of the disk and the rotating table is operable to rotate the disk (M) in a sub-scanning direction.

8. A disk mounting apparatus comprising a rotating table (50) for rotatably supporting a disk (M) and a disk holding member (51) disposed so as to move independently of the rotating table (50) in a direction of a rotating axis thereof for holding a central portion of the disk (M).

9. A disk mounting apparatus as claimed in claim 8 comprising a disk pressing member (59) disposed to face the disk holding member (51), the disc pressing member being operable to catch a central portion of the disk together with the disk holding member (51).

10. A disk mounting apparatus as claimed in claim 8 or claim 9 further comprising a horizontally movable member (10) for mounting a disk (M) thereon, the horizontally movable member being movable between a disk take-out position and a disk accommodating position, wherein the rotating table (50) is movable between lower and upper positions relative to a plane in which the horizontally movable member (10) lies when it is at the disk accommodating position.

11. A rotating printing apparatus (1) comprising a disk mounting apparatus as claimed in any one of claims 8 to 10 and a printing head for printing on a surface of a disk, wherein the rotating table (50) is operable to rotate the disk (M) relative to the printing head.

12. A rotating printing apparatus (1) as claimed in claim 11, wherein the disk (M) is a heat sensitive printing medium having a heat sensitive colour forming layer and the printing head is a thermal head (5) for heat sensitive printing in a main scanning direction along a radial direction of the disk.

13. A method for mounting a disk comprising the steps of:
raising a disk holding member (51) disposed so as to move independently of a rotating table (50) in a direction of a rotating axis thereof, to hold a central portion of the disk (M);
moving the disk holding member (51) or the rotating table (50) relatively to each other in the direction of the rotating axis to mount the disk (M) onto the rotating table (50).

14. A method for mounting a disk of claim 13, wherein the disk holding member (51) is operable to catch the central portion of the disk, together with a disk pressing member (59) disposed to face the disk holding member (51).

15. A method for mounting a disk as claimed in claim 13 or claim 14, further comprising stopping a horizontally movable member (10) at a disk accommodating position when the disk (M) is mounted thereon, wherein the step of raising the disc holding member occurs when the horizontally movable member is in the disc accommodating position and the step of moving the disk holding member (51) or the rotating table (50) involves raising the rotating table (50) so as to transfer the disk (M) onto the rotating table (50).

16. A method for mounting a disk comprising the steps of:
lowering a rotating table (50) when a disk (M) is mounted thereon and transferring the disk (M) to a disk holding member (51) that is operable to move independently of a rotating table (50) in a direction of a rotating axis thereof;
lowering the disk holding member (51) so as to transfer the disk (M) to a horizontally moving member (10); and
stopping the horizontally moving member (10) at a disk take-out position when the disk (M) is mounted thereon.
